# EUROPEAN PATENT SPECIFICATION

(11) **EP 1 445 196 B1**
(45) Date of publication and mention of the grant of the patent: **15.06.2005**
(21) Application number: 03425073.8
(22) Date of filing: 10.02.2003
(51) Int. Cl.: B65B 41/18

(54) **Forming unit for producing sealed packages from a tube of sheet packaging material filled with a pourable food product**
Einheit zum Herstellen von versiegelten Verpackungen fliessfähiger Nahrungsmittel aus schlauchförmigem Verpackungsmaterial
Unité de formage pour la fabrication d'emballages hermétiques a partir d'un matériau d'emballage tubulaire rempli d'un produit alimentaire liquide ou semi-liquide

(43) Date of publication of application: 11.08.2004
(73) Proprietor: Tetra Laval Holdings & Finance S.A., 1009 Pully (CH)
(72) Inventor: Manzini, Gianni, 41100 Modena (IT); Canti, Paolo, 41100 Modena (IT); Ghirardello, Roberto, 41100 Modena (IT)
(74) Representative: Franzolin, Luigi

(56) References cited:
- EP-A- 1 162 143
- WO-A-00/41932
- PATENT ABSTRACTS OF JAPAN vol. 1999, no. 13, 30 November 1999 (1999-11-30) -& JP 11 222212 A (TETRA LAVAL HOLDINGS &FINANCE SA), 17 August 1999 (1999-08-17)

## Description

The present invention relates to a forming unit for producing sealed packages from a tube of sheet packaging material filled with a pourable food product.

As is known, many pourable food products, such as fruit juice, pasteurized or UHT (ultra-high-temperature processed) milk, wine, tomato sauce, etc., are sold in packages made of sterilized sheet packaging material.

A typical example of such a package is the parallelepiped-shaped package for liquid or pourable food products known as Tetra Brik Aseptic (registered trademark), which is formed by folding and sealing a web of laminated packaging material.

The packaging material has a multilayer structure comprising a layer of paper material covered on both sides with layers of heat-seal plastic material, e.g. polyethylene. In the case of aseptic packages for long-storage products such as UHT milk, the packaging material comprises a layer of oxygen-barrier material, e.g. a sheet of aluminium, which is superimposed on a layer of heat-seal plastic material and is in turn covered with another layer of heat-seal plastic material eventually forming the inner face of the package contacting the food product.

As is known, such packages are made on fully automatic packaging machines, on which a continuous tube is formed from the web-fed packaging material. More specifically, the web of packaging material is unwound off a reel and fed through an aseptic chamber of the packaging machine, where it is sterilized, e.g. by applying a sterilizing agent, such as hydrogen peroxide, which is later evaporated by heating, and/or by irradiating the packaging material with radiation of appropriate wavelength and intensity; and the web so sterilized is maintained in a closed sterile environment, and is folded into a cylinder and sealed longitudinally to form a continuous tube in known manner.

The tube of packaging material, which actually forms an extension of the aseptic chamber, is fed continuously in a vertical direction, is filled with the sterilized or sterile-processed food product, and is fed through a forming unit for producing the individual packages.

The forming unit comprises two pairs of jaws, which act cyclically and successively on the tube of packaging material to grip and heat seal it along equally spaced cross sections and form a continuous strip of pillow packages connected to one another by respective transverse sealing bands, i.e. extending in a direction perpendicular to the feed direction of the tube. The pillow packages are separated by cutting the respective transverse sealing bands, and are then fed to a folding station where they are folded mechanically into the finished parallelepiped shape.

The tube portion gripped between each pair of jaws is heat sealed by heating means carried by one of the jaws and for locally melting the two layers of heat-seal plastic material gripped between the jaws.

Once the heat-seal operation is completed, a cutting member carried by one of the jaws is activated, and interacts with the tube of packaging material to cut it along the center line of the transverse sealing band, and so cut a pillow package off the bottom end of the tube of packaging material. The bottom end being sealed transversely, the jaws, on reaching the bottom dead-center position, can be opened to avoid interfering with the top portion of the tube; and, at the same time, the other two jaws, activated in exactly the same way, move down from a top dead-center position to repeat the gripping/forming, sealing and cutting operations described above.

One problem with known forming units has to do with the so-called "decoration correction" system.

That is, the web of packaging material normally comprises a series of equally spaced printed images or decorations on the portions eventually forming the outer surfaces of the packages, so that the web must be fed to the forming unit in such a manner as to register forming, sealing and cutting of the packages with the succession of decorations. In actual fact, though the decorations are printed equally spaced, the position of each with respect to the position of the jaws on the forming unit may vary, firstly as a result of varying deformation of the packaging material by the mechanical pressure exerted on it by the jaws, and, secondly, as a result of the pulsating pressure of the pourable food product inside the tube of packaging material. A decoration position correction system is therefore required, in that, on packaging machines operating at high output speeds, even the slightest deviation of the decoration from the theoretical register position, if not corrected in real time, may eventually escalate to the point of producing unacceptable packages which must be rejected.

On modern packaging machines, such a system comprises an optical sensor for detecting the position of a marker, such as a bar code, a pour hole, or a fold line, repeated at regular intervals on the web of packaging material eventually forming the fill tube; and a control unit for comparing the detected marker position with respect to a theoretical position.

On some commercial machines, each pair of jaws has a pair of traction members for exerting downward pull on the opposite sides of the tube of packaging material, and which are fitted movably to one of the jaws in each pair to form triangular tabs at the top and bottom corners of the pillow packages.

On detecting a decoration position error, the control unit adjusts the speed of the motor controlling feed of the web of packaging material. If this correction is not sufficient, the traction members are controlled to slightly increase or reduce pull on the packaging material. In other solutions, the control unit acts directly on the traction members, with no possibility of adjusting the speed of the motor controlling feed of the web of packaging material; and the operation is repeated until the decoration and theoretical positions match.

As illustrated, for example, in the present Applicant's Italian Patent n. 1296062 (JP 11 222 212), the traction members are operated, as each pair of jaws moves down, by the interaction of a relative cam, fitted adjustably to the supporting structure of the forming unit, and a relative cam follower member fitted in rocking manner to one of the jaws and connected by a mechanism to the traction members.

In the specific case described, the mechanism comprises an actuating rod, which is fitted in axially movable manner to the jaw fitted with the traction members, extends parallel to the transverse sealing bands to be formed on the tube of packaging material, and is connected, at one end, to the relative cam follower member, and, at the opposite end, to the traction members by respective articulating arms. In actual use, axial movement of the rod rotates the relative traction members towards each other and downwards, so as to grip more or less packaging material and so adjust the decoration position with respect to the jaws.

Each cam is fixed laterally to a relative upright of the forming unit supporting structure, is movable along a horizontal plane perpendicular to the feed path of the tube of packaging material, and extends mainly vertically with an initial portion in the form of an oblique ramp. The greater or lesser extent to which each cam is moved towards the relative jaw produces greater or lesser travel of the actuating rod, which corresponds to greater or lesser rotation of the traction members and, therefore, greater or lesser pulling action on the tube of packaging material.

The movement of each cam is controlled, via transmission means, by a relative continuous linear actuating member, e.g. a pneumatic cylinder, fitted to the forming unit supporting structure and activated by the decoration correction system control unit.

To obtain, during the forming process, a fairly accurate correction of the decoration position with respect to the pairs of jaws interacting with the tube of packaging material, the maximum travel of the linear actuating member, and consequently the excursion between the minimum and maximum approach positions of each cam and the relative jaw, must be limited.

As a result, even in the minimum approach position of each cam and the relative jaw, there is still some interaction between the cam and relative cam follower member, and therefore a minimum amount of travel of the traction members.

This may pose problems when starting up the packaging machine. In particular, when starting up, the tube of sterile packaging material is fed empty between the pairs of jaws on the forming unit, is normally flat, and is wider than the tube containing the pourable food product.

Consequently, even with the cams in the minimum approach position with respect to the relative jaws, there is still a significant amount of interaction between the traction members and the packaging material of the flat tube, which, containing no food product, is less resistant to and more easily damaged by the traction members, thus resulting in impaired sterility.

It is an object of the present invention to provide a forming unit for producing sealed packages from a tube of sheet packaging material filled with a pourable food product, and designed to eliminate the aforementioned drawback typically associated with known units.

According to the present invention, there is provided a forming unit for producing sealed packages from a tube of sheet packaging material, as claimed in Claim 1.

The present invention also relates to a method of producing sealed packages from a tube of sheet packaging material, as claimed in Claim 8.

A preferred, non-limiting embodiment of the present invention will be described by way of example with reference to the accompanying drawings, in which:
Figures 1 and 2 show, with parts removed for clarity, schematic front and side views respectively of a forming unit in accordance with the present invention, for producing sealed packages from a tube of sheet packaging material filled with a pourable food product;
Figures 3 and 4 show, with parts removed for clarity, enlarged rear-side views in perspective of a sealing jaw and a decoration correction device of the Figure 1-2 forming unit in two different operating configurations;
Figure 5 shows a section in horizontal plane V-V in Figure 3;
Figures 6 and 7 show larger-scale side views of a detail of the forming unit in the Figure 3 and 4 operating configurations respectively;
Figure 8 shows a larger-scale cross section, with parts removed for clarity, of a portion of the sealing jaw in Figures 3 and 4.

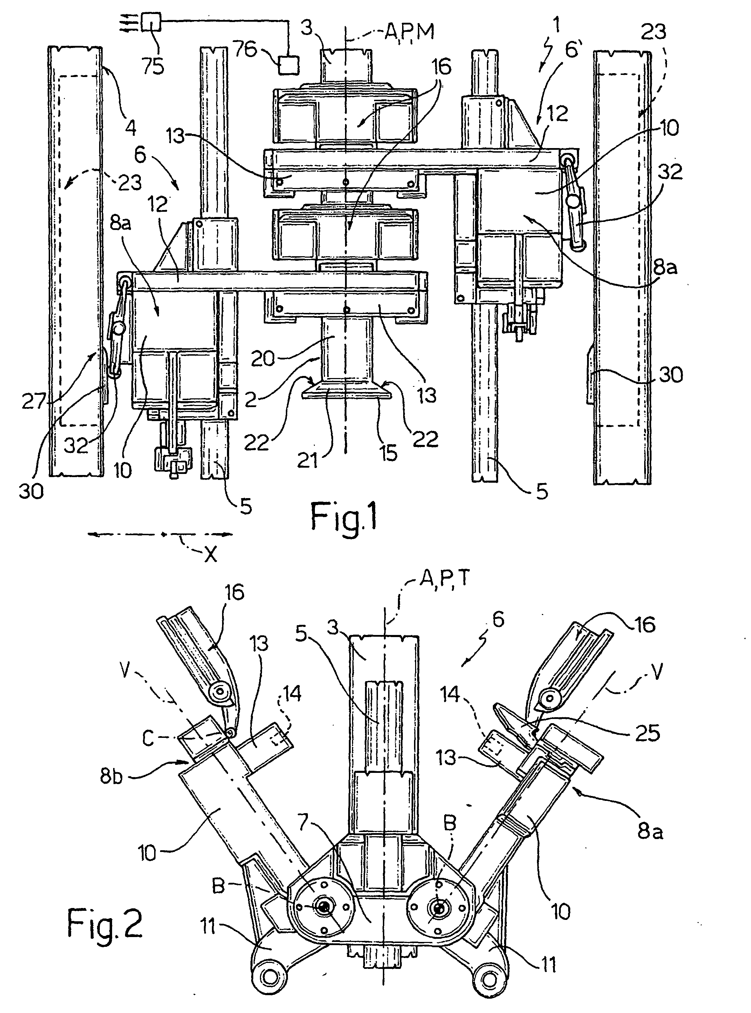

Number 1 in Figure 1 indicates as a whole a forming unit for producing sealed packages 2 from a tube 3 of sheet packaging material having an axis A, filled with a pourable food product, and fed along a vertical path P parallel to axis A.

More specifically, tube 3 is formed in known manner by longitudinally folding and sealing a web of packaging material, and is filled upstream from unit 1 with the food product for packaging.

The web of packaging material has a multilayer structure (not shown), and conveniently comprises a layer of paper material covered on both sides with layers of heat-seal plastic material, e.g. polyethylene. In the case of aseptic packages for long-storage products, such as UHT milk, the packaging material comprises a layer of oxygen-barrier material defined, for example, by a sheet of aluminium, which is superimposed on a layer of heat-seal plastic material, and is in turn covered with another layer of heat-seal plastic material eventually defining the inner face of packages 2 contacting the food product.

On the side eventually defining the outer surface of packages 2, the web of packaging material has a succession of graphics or decorations (not shown) repeated at regular intervals with a given spacing.

Unit 1 comprises a supporting structure 4 defining two vertical guides 5, which are located symmetrically with respect to a central vertical longitudinal plane M of unit 1 through axis A, and the axes of which lie in a central vertical transverse plane T of unit 1, so that axis A defines the intersection of planes M and T.

Unit 1 comprises in known manner two forming assemblies 6, 6' movable vertically along respective guides 5, and therefore along part of path P, and which interact cyclically and alternately with tube 3 of packaging material to grip and heat seal cross sections of the tube.

Since forming assemblies 6, 6' are symmetrical with respect to plane M, only one (forming assembly 6) is shown in detail in Figures 2 to 8 and described below; and the corresponding parts of forming assemblies 6, 6' are indicated in Figure 1 using the same reference numbers.

As shown in Figures 1 and 2, forming assembly 6 substantially comprises a slide 7 running along respective guide 5; and two jaws 8a, 8b hinged at the bottom to slide 7 about respective horizontal axes B parallel to and symmetrical with respect to plane T, so as to open and close substantially "book-fashion".

The reciprocating movement of slides 7 and the opening/closing movement of jaws 8a, 8b are controlled, in known manner not described, by pairs of vertical rods (not shown) in turn controlled by rotary cams or servomotors.

More specifically, each jaw 8a, 8b comprises a main control body 10 substantially in the form of a quadrangular plate extending along a work plane V (Figure 2) of jaw 8a, 8b containing respective axis B, and which is hinged, close to its bottom side, to slide 7, and has a respective control arm 11 projecting from the face of body 10 facing away from plane V, and activated, in known manner not shown, by one of said vertical rods.

Jaws 8a, 8b also comprise respective supporting arms 12, which are fixed to the top ends of respective bodies 10, and project towards and beyond plane M, in a direction parallel to respective axes B and substantially along respective work planes V, so as to be located on opposite sides of tube 3.

The projecting portions of arms 12 of jaws 8a, 8b are fitted with respective bar-shaped auxiliary bodies 13 (Figures 1-4 and 8) in turn fitted with respective sealing members 14 (shown schematically by the dash line in Figure 2), which interact with tube 3, and which may be defined, for example, by an inductor for generating current in the aluminium layer of the packaging material to Joule-effect melt the thermoplastic layer, and by a pad for providing the back pressure required to grip tube 3 to the required pressure.

Jaws 8a, 8b are movable between a closed position wherein respective sealing members 14 grip tube 3, and a fully-open position.

At the transverse sealing stage, tube 3 is heat sealed along equally spaced cross sections to form respective sealing bands 15.

Arms 12 of jaws 8a, 8b are fitted, over respective auxiliary bodies 13, with respective shells 16 or so-called "volume boxes" for controlling the volume of packages 2 being formed, and which are only shown in Figures 1 and 2 and only described briefly insofar as necessary for a clear understanding of the present invention.

More specifically, shells 16 are hinged at the bottom to arms 12 of respective jaws 8a, 8b about respective axes C parallel to axes B, and are maintained in a given position on arms 12 by known elastic means not shown.

Shells 16 have a C-shaped cross section open at the front, and, following transverse sealing by sealing members 14, cooperate with each other to define a cavity of given shape and volume, and which encloses tube 3 to form it into a rectangular-section configuration.

This forming stage produces pillow packages 2 having a main portion 20 of a shape and volume corresponding to those of the finished packages, and transition portions 21 defined laterally by substantially triangular faces 22 and connecting main portion 20 to the respective adjacent sealing bands 15.

Forming assembly 6 also comprises a device 23 for adjusting the position of the decorations on tube 3 of packaging material with respect to jaws 8a, 8b, so that the decorations are positioned correctly on the outer faces of packages 2 issuing from unit 1.

Device 23 substantially comprises a pair of traction members 25 fitted movably to one (8a) of jaws 8a, 8b, and for exerting pull on tube 3 of packaging material in the direction of path P; and an adjustable cam assembly 26 for activating traction members 25 at a given station 27 along path P, and for adjusting the travel of traction members 25 to control longitudinal feed of tube 3 through unit 1.

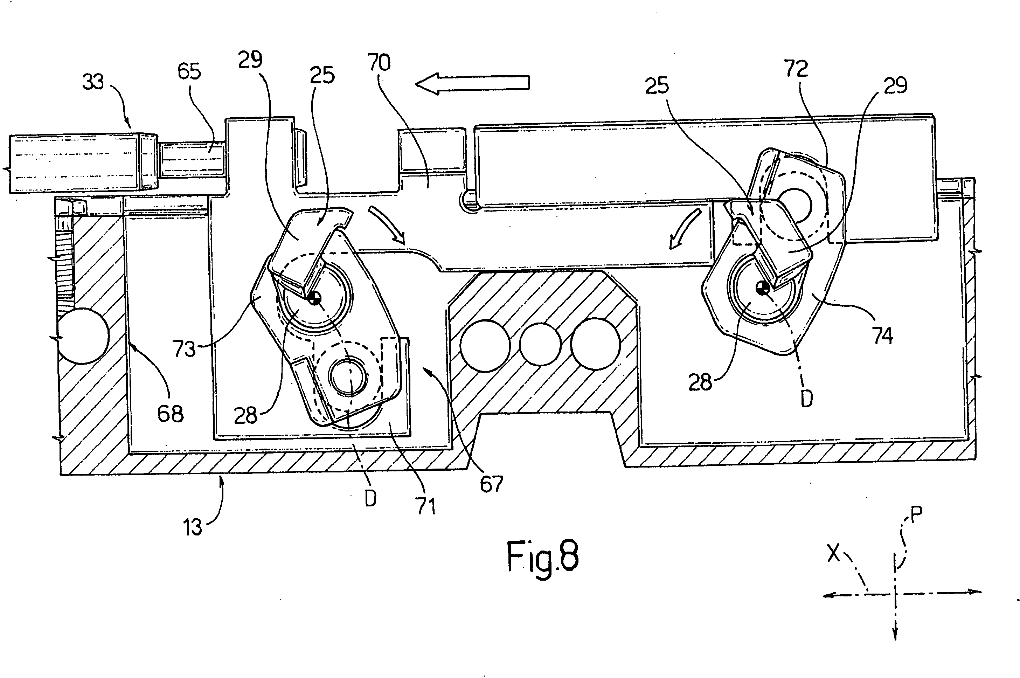

Traction members 25 are located on either side of and adjacent to tube 3, and are symmetrical with respect to axis A. More specifically, traction members 25 (Figures 2 and 8) comprise respective pins 28 fitted in axially fixed and rotary manner through respective through holes formed in auxiliary body 13 of jaw 8a and having axes D perpendicular to plane V; and respective tabs 29 fitted eccentrically and integrally to pins 28, and which interact with the packaging material of tube 3.

More specifically, tabs 29 project from respective ends of pins 28 facing tube 3, and so project from relative arm 12 of jaw 8a on the same side as and above relative sealing member 14 (Figure 2), are curved with their concavities facing, and taper in section towards tube 3.

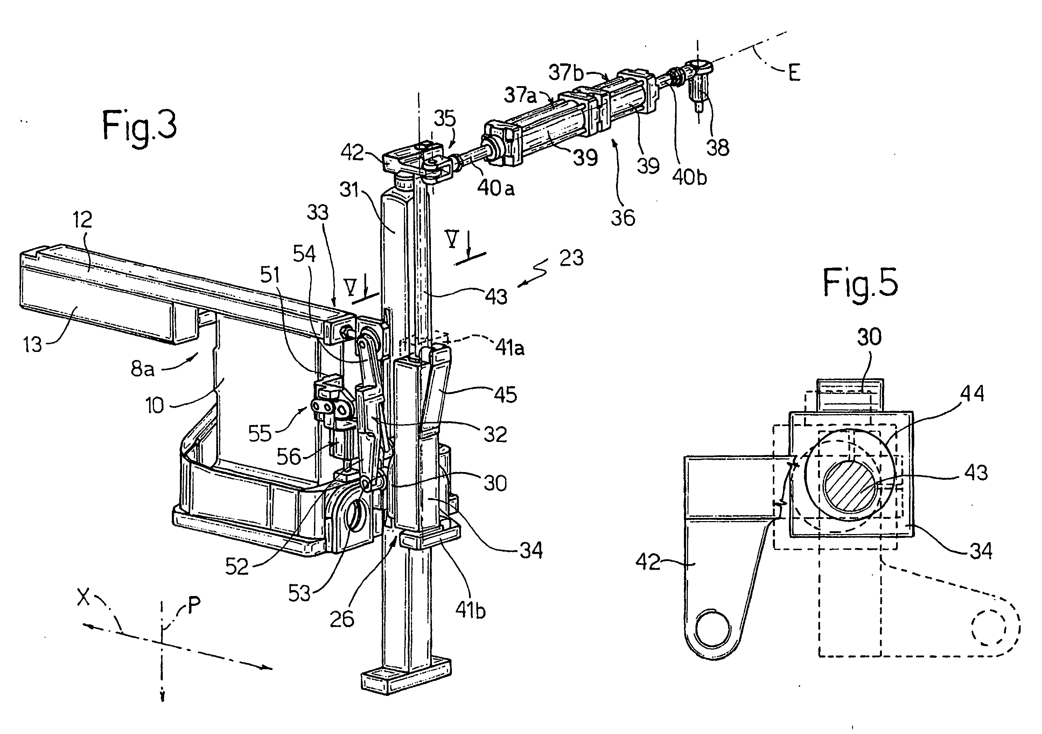

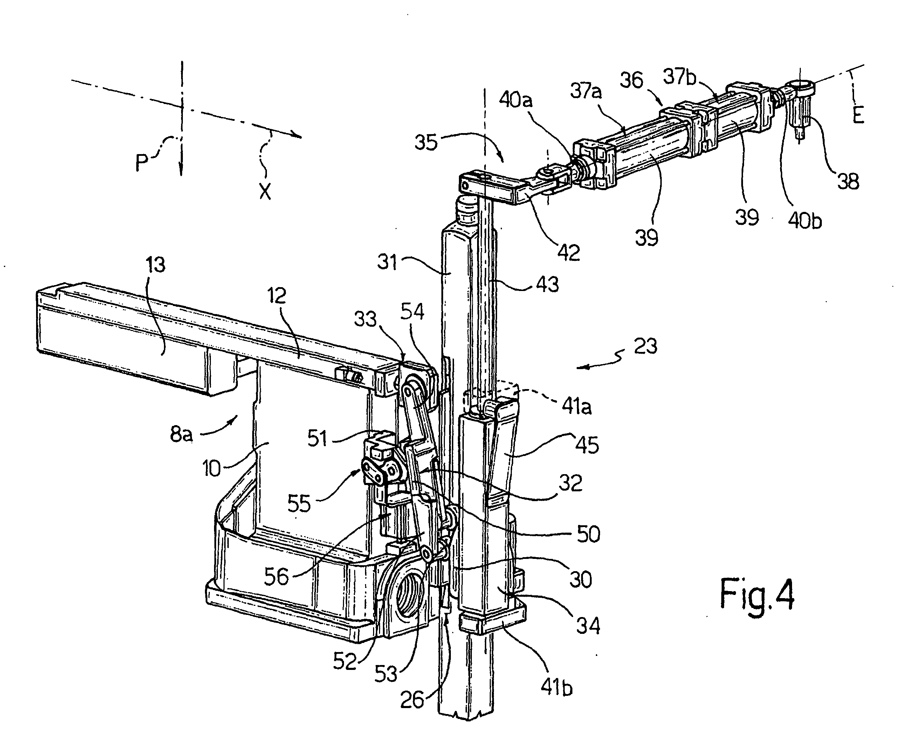

With reference to Figures 3 and 4, cam assembly 26 comprises a cam 30 fixed to an upright 31 of supporting structure 4 and extending mainly vertically with an initial portion in the form of an oblique ramp; and a cam follower member 32, which is fitted to jaw 8a, is connected to traction members 25, and cooperates in sliding manner with cam 30, as forming assembly 6 moves along relative guide 5, and therefore along path P, so as to be moved by cam 30 in a direction X perpendicular to path P and to plane M, and parallel to the extension direction of arm 12 of jaw 8a.

As described in detail later on, traction members 25 are connected to cam follower member 32 by a mechanism 33, which converts the movements in direction X of cam follower member 32 into equal opposite rotations of traction members 25 about respective axes D, so that tabs 29 are moved symmetrically with respect to path P.

Cam 30 is defined by a contoured projection formed on a lateral face of a vertical parallelepiped-shaped block 34 fixed to upright 31 and movable along a horizontal plane perpendicular to path P to adjust the position of cam 30 in direction X.

The movements of block 34 and, therefore, of cam 30 along the horizontal plane are controlled, via a mechanism 35, by a fluid-operated linear actuator 36 fitted to supporting structure 4.

In the example shown, actuator 36 is defined by two two-position pneumatic cylinders 37a, 37b, which are arranged in series, are coaxial with an axis E perpendicular to direction X and to axis A, and are interposed between mechanism 35 and a fixed member 38 integral with supporting structure 4.

More specifically, cylinders 37a, 37b have respective jackets 39 fixed end to end, and inside which slide respective pistons, the rods 40a, 40b of which project from opposite ends of jackets 39 and are connected to mechanism 35 and fixed member 38 respectively.

Block 34, on which cam 30 is formed, is supported between two, respectively top and bottom, plates 41a, 41b fixed rigidly to and projecting from upright 31.

Mechanism 35 comprises a horizontal L-shaped lever 42 having one end hinged to the outwardly-projecting end of rod 40a of relative cylinder 37a, and the opposite end fixed integrally to the top end of a vertical rod 43, the bottom end of which extends in axially fixed and rotary manner through plate 41a, and is fitted integrally, in an eccentric position, with a cylindrical member 44 mounted to rotate inside a central vertical seat of block 34. The movement of one of rods 40a, 40b of cylinders 37a, 37b therefore rotates rod 43 about its axis, so that, given the eccentric connection of rod 43 and block 34, cam 30 moves along the horizontal plane, with a component in direction X.

A leaf spring 45 extends vertically on one side of block 34, and has one end fixed to plate 41a, and an opposite free end pressing elastically against the opposite face of block 34 to that from which the cam projects, so as to keep block 34 in a predetermined angular position with respect to cylindrical member 44.

Actuator 36 is designed to enable, along axis E, three different operating positions of the projecting end of rod 40a with respect to fixed member 38, and which correspond to three different angular positions of rod 43, and three possible settings of cam 30 in direction X.

Alternatively, actuator 36 may be defined by a pneumatic so-called "multistep" cylinder enabling three different operating positions of its output member.

According to a further possible embodiment, actuator 36 may be defined by a powered cylinder defining a number of different operating positions.

As shown in Figures 3, 4, 6 and 7, cam follower member 32 is defined by a rocker arm lever having an intermediate portion 50 connected, in rotary manner about an axis F perpendicular to axis A and to direction X, to a support 51 fixed rigidly to and projecting from main body 10 of jaw 8a on the opposite side to that from which relative arm 12 projects; a first end portion 52 fitted with an idle roller 53 cooperating in rolling manner with cam 30; and an opposite second end portion 54 connected by mechanism 33 to traction members 25.

More specifically, cam follower member 32 projects from support 51 and extends substantially vertically.

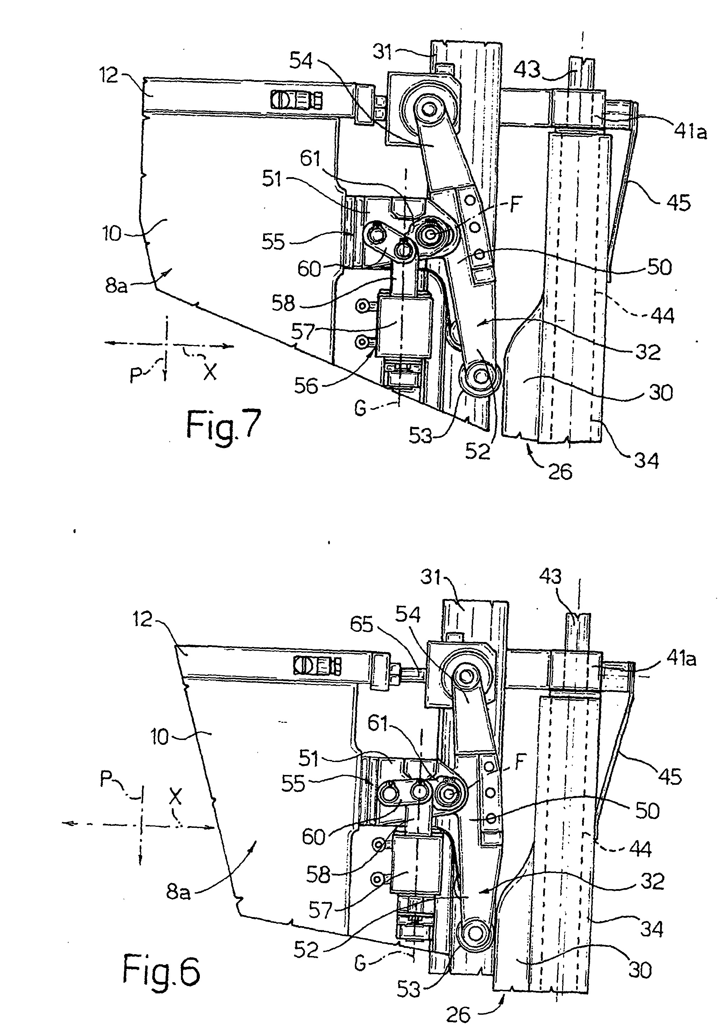

Intermediate portion 50 of cam follower member 32 is advantageously connected to support 51 by a toggle mechanism 55 crosswise to cam follower member 32, and which, by means of an actuator 56 also fitted to support 51, is movable selectively between an extended configuration of maximum length (Figures 3 and 6), wherein cam follower member 32 is maintained in a work configuration, i.e. cooperating with cam 30, and a withdrawn configuration of minimum length (Figures 4 and 7), wherein cam follower member 32 is maintained in a disabled configuration, i.e. detached from cam 30.

In the example shown (Figures 6 and 7), actuator 56 is defined by a pneumatic cylinder, and comprises a jacket 57 fixed to and projecting from support 51 with its axis G parallel to axis A; and a movable member 58 mounted to slide axially inside jacket 57, and having an end portion projecting from jacket 57 and connected to toggle mechanism 55.

Toggle mechanism 55 comprises two levers 60, 61 extending, in the extended configuration, perpendicular to movable member 58 and substantially parallel to direction X, and having adjacent ends hinged to each other and to movable member 58, and opposite ends hinged to support 51 and intermediate portion 50 of cam follower member 32 respectively.

Movable member 58 is movable between a forward position of maximum extraction from jacket 57 (Figures 3 and 6), wherein toggle mechanism 55 is maintained in the extended configuration corresponding to the work configuration of cam follower member 32, and a withdrawn position of minimum extraction from jacket 57, wherein toggle mechanism 55 is maintained in the withdrawn configuration corresponding to the disabled configuration of cam follower member 32.

With particular reference to Figures 6, 7 and 8, mechanism 33 comprises a rod 65 mounted to slide axially inside a longitudinal seat of arm 12 of jaw 8a, and having an end portion projecting from said seat and hinged to end portion 54 of cam follower member 32; and a transmission mechanism 67, which is housed inside a cavity 68 inside auxiliary body 13 of jaw 8a and communicating with the above seat, and is interposed between rod 65 and pins 28 of traction members 25.

More specifically, transmission mechanism 67 comprises a platelike lever 70, which is fixed integrally to an end portion of rod 65 opposite the end portion hinged to cam follower member 32, is movable with rod 65 inside cavity 68 in a direction parallel to direction X, and defines two connecting portions 71, 72, to which are hinged respective arms 73, 74 for activating traction members 25 and projecting radially from and fitted to respective pins 28.

More specifically, lever 70 extends along a plane parallel to plane V, and forms different angles with arms 73, 74, so that linear movement of rod 65 in direction X rotates traction members 25 in opposite directions about respective axes D.

Unit 1 is controlled by a known electronic central control unit 75 (shown schematically in Figure 1), which, by means of one or more optical sensors 76 (also shown schematically in Figure 1), determines the actual position of the decorations on the packaging material eventually forming packages 2, compares the actual position with a theoretical reference position, and accordingly commands actuator 36 of each forming assembly 6, 6' to adjust the position of relative cam 30 in direction X, and so adjust the pull to be exerted by traction members 25.

In particular operating conditions, central control unit 75 also commands actuator 56, associated with each pair of jaws 8a, 8b, to move each cam follower member 32 between the work and disabled configurations by means of relative toggle mechanism 55.

More specifically, in the steady operating condition of unit 1, movable member 58 of each actuator 56 is maintained in the forward position enabling interaction between each cam 30 and relative cam follower member 32, and therefore operation of traction members 25.

Conversely, when starting up unit 1, movable member 58 of each actuator 56 is maintained in the withdrawn position preventing any interaction between each cam 30 and relative cam follower member 32, and therefore between traction members 25 and the empty tube 3 of packaging material fed along path P.

Preferably, movable member 58 of each actuator 56 is normally set to the withdrawn position (Figures 4 and 7), and is moved to the forward position by central control unit 75 activating actuator 56. Alternatively, movable member 58 of each actuator 56 may be normally set to the forward position, and moved into the withdrawn position by central control unit 75 activating actuator 56.

In actual use, jaws 8a, 8b of each forming assembly 6, 6' close as the assembly moves down, so as to grip tube 3 with a downward vertical component of motion equal to the traveling speed of tube 3. More specifically, jaws 8a and 8b of each forming assembly 6, 6' are brought together to gradually deform tube 3 and "flatten" it at a cross section or transverse band; at which point, sealing members 14 seal the two superimposed portions of packaging material forming the flat transverse band.

On nearing the bottom dead-center position of the downward travel of each forming assembly 6, 6', jaws 8a, 8b open to release tube 3, and are opened completely as they move upwards and prior to reaching the top dead-center position of their upward travel. At this point, jaws 8a, 8b begin closing, and are fully closed by the time they begin moving down.

The movements of the two forming assemblies 6, 6' are obviously offset by a half cycle : forming assembly 6 travels upwards with jaws 8a, 8b open, at the same time as forming assembly 6' travels downwards with jaws 8a, 8b closed, so as to avoid interference.

In the steady operating condition of unit 1, movable member 58 of actuator 56 of each jaw 8a is set to the forward position (Figures 3 and 6), in which relative toggle mechanism 55 is maintained in the extended configuration, and relative cam follower member 32 in the work configuration. As each forming assembly 6, 6' moves down, roller 53 of cam follower member 32 of relative jaw 8a contacts the initial oblique-ramp portion of relative cam 30 (Figure 3), which diverts end portion 52 in direction X towards jaw 8a.

Accordingly, cam follower member 32 rotates about axis F, about which it is hinged to relative jaw 8a, so that end portion 54 moves in direction X away from jaw 8a, and draws rod 65 in the same direction.

As shown by the arrows in Figure 8, by means of arms 73 and 74, the above linear movement of rod 65 in direction X rotates traction members 25 towards each other and downwards to exert a predetermined pull on the packaging material of tube 3.

When any difference is detected between the actual and reference positions of the decorations, central control unit 75 commands actuator 36 of the forming assembly 6, 6' about to act on tube 3 to adjust the position of relative cam 30 in direction X, and so adjust the pull to be exerted on tube 3 by relative traction members 25.

More specifically, activation of actuator 36 rotates rod 43 about its axis, so that, given the eccentric connection between rod 43 and block 34, cam 30 moves along the horizontal plane with the desired component in direction X.

The above operation is repeated until the actual and reference positions of the decorations match.

When starting up unit 1, movable members 58 of actuators 56 are set to the withdrawn positions (Figures 4 and 7) corresponding to the withdrawn configuration of toggle mechanisms 55 and the disabled configuration of relative cam follower members 32.

As forming assemblies 6, 6' move down, there is therefore no interaction between cam follower members 32 and relative cams 30, so that traction members 25 remain idle.

Any interference between traction members 25 and the empty tube 3 of packaging material fed along path P is therefore avoided, thus eliminating any risk of damage or impaired sterility of tube 3.

Clearly, changes may be made to unit 1 as described herein without, however, departing from the scope of the accompanying Claims.

In particular, unit 1 may comprise two series of jaws 8a and 8b forming part of respective chain conveyors defining respective endless jaw paths, extending on opposite sides of the feed path of tube 3, and cooperating cyclically with each other in pairs. In which case, each forming assembly 6, 6' would be defined by one jaw on one of the two conveyors, and by the corresponding jaw on the other conveyor.

## Claims

1. A forming unit (1) for producing sealed packages (2) from a tube (3) of sheet packaging material fed along a feed path (P), filled with a pourable food product, and having a succession of equally spaced decorations; said unit (1) comprising jaw means (6, 6') movable cyclically along part of said path (P) to grip and seal said tube (3) of packaging material at equally spaced cross sections defining opposite sealing bands (15) of said packages (2), and an adjusting device (23) for adjusting the position of said decorations with respect to said jaw means (6, 6'); said adjusting device (23) comprising traction means (25) fitted movably to said jaw means (6, 6') and exerting pull on said tube (3) of packaging material to adjust feed of the tube along said path (P), and a cam assembly (26) for controlling and activating travel of said traction means (25) at a predetermined station (27) along said path (P); said cam assembly (26) comprising first interaction means (30) carried by fixed supporting means (31), and second interaction means (32) carried by said jaw means (6, 6'), connected to said traction means (25), and cooperating with said first interaction means (30) by virtue of the movement of said jaw means (6, 6') along said path (P); **characterized by** comprising actuating means (55, 56) activatable selectively to move said second interaction means (32) between a work configuration cooperating with said first interaction means (30), and a disabled configuration detached from said first interaction means (30).

2. A unit as claimed in Claim 1, **characterized in that** said actuating means (55, 56) are so controlled as to move said second interaction means (32) into said disabled configuration when starting up said unit (1).

3. A unit as claimed in Claim 1 or 2, **characterized in that** said first and second interaction means (30, 32) cooperate in a direction parallel to said path (P); and **in that** said actuating means comprise a toggle mechanism (55) extending crosswise to said path (P) and connecting said second interaction means (32) to said jaw means (6, 6'), and an actuator (56) for moving said toggle mechanism (55) between an extended configuration defining said work configuration of said second interaction means (32), and a withdrawn configuration defining said disabled configuration of said second interaction means (32).

4. A unit as claimed in Claim 3, **characterized in that** said actuator (56) comprises an output member (58) movable in a direction (G) parallel to said path (P); and **in that** said toggle mechanism (55) comprises two levers (60, 61) having adjacent ends hinged to each other and to said output member (58) of said actuator (56), and opposite ends hinged to said jaw means (6, 6') and to said second interaction means (32) respectively.

5. A unit as claimed in any one of the foregoing Claims, **characterized in that** said jaw means comprise at least two forming assemblies (6, 6'), each defined by two jaws (8a, 8b) cooperating cyclically with each other and with said tube (3); and **in that** said traction means (25), said actuating means (55, 56), and said second interaction means (32) are carried by one (8a) of said jaws (8a, 8b) of each said forming assembly (6, 6').

6. A unit as claimed in any one of the foregoing Claims, **characterized in that** said first interaction means comprise a cam (30) extending mainly parallel to said path (P) with a ramplike initial portion, and fixed to said supporting means (31) in a position adjustable in a plane perpendicular to said path (P); said second interaction means comprising a cam follower member (32) cooperating in sliding manner with said cam (30) so as to be moved by the cam in a direction (X) crosswise to said path (P).

7. A unit as claimed in Claim 6, **characterized in that** said cam follower member (32) is a rocker arm lever having an intermediate portion (50) hinged to said toggle mechanism (55), a first end portion (52, 53) cooperating with said cam (30), and a second end portion (54) connected to said traction means (25) by motion transmission means (33).

8. A method of producing sealed packages (2), on a forming unit (1), from a tube (3) of sheet packaging material fed along a feed path (P), filled with a pourable food product, and having a succession of equally spaced decorations; said method comprising the steps of:
- moving jaw means (6, 6') of said forming unit (1) cyclically along part of said path (P) to grip and seal said tube (3) of packaging material at equally spaced cross sections defining opposite sealing bands (15) of said packages (2); and
- adjusting the position of said decorations with respect to said jaw means (6, 6') by exerting pull on said tube (3) to adjust feed of the tube along said path (P), and which is controlled by a cam assembly (26) comprising fixed first interaction means (30), and second interaction means (32) carried by said jaw means (6, 6') and cooperating with said first interaction means (30) by virtue of the movement of the jaw means (6, 6') along said path (P);
**characterized by** also comprising the further step of selectively moving said second interaction means (32) between a work configuration cooperating with said first interaction means (30), and a disabled configuration detached from said first interaction means (30).

9. A method as claimed in Claim 8, **characterized in that** said second interaction means (32) are moved into said disabled configuration when starting up said unit (1).

## Patentansprüche

1. Formeinheit (1) zum Herstellen von versiegelten Verpackungen (2) aus einem Schlauch (3) aus bahnförmigem Verpackungsmaterial, der entlang eines Versorgungspfads (P) zugeführt wird, mit einem schüttfähigen Nahrungsmittel gefüllt ist und eine Folge gleich beabstandeter Dekorationen aufweist; wobei die Einheit (1) Backen (6, 6') umfasst, die zyklisch entlang eines Teils des Pfads (P) verschiebbar sind, um den Schlauch (3) aus Verpackungsmaterial an gleich beabstandeten Querabschnitten, die einander gegenüberliegende Dichtungsbänder (15) der Verpackungen (2) definieren, zu erfassen und zu versiegeln, sowie eine Einstellvorrichtung (23), um die Position der Dekorationen gegenüber den Backen (6, 6') einzustellen; wobei die Einstellvorrichtung (23) Zugmittel (25) umfasst, die beweglich an den Backen (6, 6') angeordnet sind und Zug auf den Schlauch aus Verpackungsmaterial ausüben, um die Zufuhr des Schlauchs entlang des Pfads (P) einzustellen, sowie eine Nockenanordnung (26), die die Zugmittel (25) an einer vorbestimmten Station (27) entlang des Pfads (P) steuert und in Bewegung setzt; wobei die Nockenanordnung (26) erste durch feste Stützmittel (31) getragene wechselseitig eingreifende Mittel (30) und zweite durch die Backen (6, 6') getragene wechselseitig eingreifende Mittel (32) umfasst, die mit den Zugmitteln (25) verbunden sind und mit den ersten wechselseitig eingreifenden Mitteln (30) durch Bewegen der Backen (6, 6') entlang des Pfads (P) zusammenwirken; **dadurch gekennzeichnet, dass** Bedienungsmittel (55, 56) enthalten sind, die wahlweise aktiviert werden können, um die zweiten wechselseitig eingreifenden Mittel (32) zwischen einer Arbeitsstellung, die mit den wechselseitig eingreifende Mitteln (30) zusammenwirkt, und einer Sperrstellung, die von den ersten wechselseitig eingreifenden Mitteln (30) gelöst ist, zu bewegen.

2. Einheit nach Anspruch 1, **dadurch gekennzeichnet, dass** die Bedienungsmittel (55, 56) derart gesteuert werden, dass die zweiten wechselseitig eingreifenden Mittel (32) in die Sperrstellung bewegt werden, wenn die Einheit (1) gestartet wird.

3. Einheit nach Anspruch 1 oder 2, **dadurch gekennzeichnet, dass** die ersten und zweiten wechselseitig eingreifenden Mittel (30, 32) parallel zu dem Pfad (P) zusammenwirken; und dass die Bedienungsmittel einen Kippmechanismus (55) enthalten, der sich quer zum Pfad (P) erstreckt und die zweiten wechselseitig eingreifenden Mittel (32) mit den Backen (6, 6') verbindet, und ein Stellteil (56), um den Kippmechanismus (55) zwischen einer ausgefahrenen Stellung, die die Arbeitsstellung der zweiten wechselseitig eingreifenden Mittel (32) definiert, und einer zurückgezogenen Stellung, die die Sperrstellung der zweiten wechselseitig eingreifenden Mittel (32) definiert, zu bewegen.

4. Einheit nach Anspruch 3, **dadurch gekennzeichnet, dass** das Stellteil (56) ein Ausgabeelement (58) umfasst, das in eine Richtung (G) parallel zum Pfad (P) bewegbar ist, und dass der Kippmechanismus (55) zwei Hebel (60, 61) mit angrenzenden Enden hat, die drehbar aneinander und an das Ausgabeelement (58) des Stellteils (56) angeordnet sind, sowie gegenüberliegende Enden, die an die Backen (6, 6') und an die zweiten wechselseitig eingreifenden Mittel (32) jeweils drehbar angeordnet sind.

5. Einheit nach einem der vorhergehenden Ansprüche, **dadurch gekennzeichnet, dass** die Backen wenigstens zwei Formanordnungen (6, 6') enthalten, die jeweils durch zwei zyklisch miteinander und mit dem Schlauch (3) zusammenwirkenden Backen (8a, 8b) definiert werden; und dass die Zugmittel (25), die Bedienungsmittel (55, 56) und die zweiten wechselseitig eingreifenden Mittel (32) von einer (8a) der Backen (8a, 8b) jeder Formanordnung (6, 6') getragen werden.

6. Einheit nach einem der vorhergehenden Ansprüche, **dadurch gekennzeichnet, dass** die ersten wechselseitig eingreifenden Mittel eine Nocke (30) enthalten, die sich im Wesentlichen parallel zu dem Pfad (P) mit einem rampenartigen Anfangsabschnitt erstreckt, und an den Stützmitteln (31) in einer Position befestigt ist, die in einer Ebene senkrecht zu dem Pfad (P) einstellbar ist; wobei die zweiten wechselseitig eingreifenden Mittel ein Nockenmitnehmerelement (32) enthalten, das gleitend mit der Nocke (30) zusammenwirkt, um von der Nocke in eine Richtung (X) quer zum Pfad (P) bewegt zu werden.

7. Einheit nach Anspruch 6, **dadurch gekennzeichnet, dass** das Nockenmitnehmerelement (32) ein Kipphebelarm ist, umfassend einen drehbar an dem Kippmechanismus (55) angebrachten Zwischenabschnitt (50), einen ersten mit der Nocke (30) zusammenwirken Endabschnitt (52, 53) und einen zweiten mit den Zugmitteln (25) durch Bewegen des Getriebes (33) verbundenen Endabschnitt (54).

8. Verfahren zur Herstellung von versiegelten Verpackungen, auf einer Formeinheit (1), aus einem Schlauch (3) aus bahnförmigem Verpackungsmaterial, der entlang eines Versorgungspfads (P) zugeführt wird, mit einem schüttfähigen Nahrungsmittel gefüllt ist und eine Folge gleich beabstandeter Dekorationen aufweist; wobei das Verfahren die folgenden Schritte umfasst:
- Bewegen der Backen (6, 6') der Formeinheit (1) zyklisch entlang des Pfads (P), um den Schlauch (3) aus Verpackungsmaterial an gleich beabstandeten Querabschnitten, die einander gegenüberliegende Dichtungsbänder (15) der Verpackungen (2) definieren, zu erfassen und zu versiegeln; und
- Einstellen der Position der Dekorationen gegenüber den Backen (6, 6'), indem Zug auf den Schlauch (3) ausgeübt wird, um die Zufuhr des Schlauchs entlang des Pfads (P) einzustellen, und die durch eine Nockenanordnung (26) gesteuert wird, umfassend feste erste wechselseitig eingreifende Mittel (30) und zweite wechselseitig eingreifende Mittel (32), die von den Backen (6, 6') getragen werden und mit den ersten wechselseitig eingreifende Mitteln (30) durch Bewegen der Backen (6, 6') entlang des Pfads (P) zusammenwirken;
- **dadurch gekennzeichnet, dass** auch der weitere Schritt des wahlweisen Bewegens der zweiten wechselseitig eingreifenden Mittel (32) zwischen einer Arbeitsstellung, die mit den ersten:wechselseitig eingreifenden Mitteln (30) zusammenwirkt, und einer Sperrstellung, losgelöst von den ersten wechselseitig eingreifenden Mitteln (30), enthalten ist.

9. Verfahren nach Anspruch 8, **dadurch gekennzeichnet, dass** die zweiten wechselseitig eingreifenden Mittel (32) in die Sperrstellung bewegt werden, wenn die Einheit (1) gestartet wird.

## Revendications

1. Unité de formage (1) pour la fabrication d'emballages hermétiques (2) à partir d'un tube (3) de matériau d'emballage en feuille avancé le long d'un chemin d'avance (P), rempli avec un produit alimentaire fluide, et ayant une succession de décorations équidistantes ; la dite unité (1) comprenant des mâchoires (6, 6') déplaçables cycliquement le long d'une partie du dit chemin (P) de façon à saisir et souder le dit tube (3) de matériau d'emballage à l'endroit de sections transversales équidistantes définissant des bandes de fermeture opposées (15) des dits emballages (2), et un dispositif de réglage (23) pour régler la position des dites décorations par rapport aux dites mâchoires (6, 6'), le dit dispositif de réglage (23) comprenant des moyens de traction (25) montés de façon mobile sur les dites mâchoires (6, 6') et exerçant une traction sur le dit tube (3) de matériau d'emballage afin d'ajuster l'avance du tube le long du dit chemin (P), et un dispositif de came (26) pour commander et activer le déplacement des dits moyens de traction (25) à une station prédéterminée (27) le long du dit chemin (P); le dit dispositif de came (26) comprenant un premier moyen d'interaction (30) porté par un moyen de support fixe (31 ), et un deuxième moyen d'interaction (32) porté par les dites mâchoires (6, 6'), relié aux dits moyens de traction (25), et coopérant avec le dit premier moyen d'interaction (30) du fait du mouvement des dites mâchoires (6, 6') le long du dit chemin (P) ; **caractérisée en ce qu'**elle comprend des moyens de manoeuvre (55, 56) activables sélectivement pour déplacer le dit deuxième moyen d'interaction (32) entre une configuration active de coopération avec le dit premier moyen d'interaction (30) et une configuration inactive éloignée du dit premier moyen d'interaction (30).

2. Unité selon la revendication 1, **caractérisée en ce que** les dits moyens de manoeuvre (55, 56) sont commandés de façon à amener le dit deuxième moyen d'interaction (32) à la dite configuration inactive au démarrage de la dite unité (1).

3. Unité selon la revendication 1 ou 2, **caractérisée en ce que** les dits premier et deuxième moyens d'interaction (30, 32) coopèrent dans une direction parallèle au dit chemin (P) ; et **en ce que** les dits moyens de manoeuvre comprennent un mécanisme à genouillère (55) s'étendant transversalement au dit chemin (P) et reliant le dit deuxième moyen d'interaction (32) aux dites mâchoires (6, 6'), et un actionneur (56) pour déplacer le dit mécanisme à genouillère (55) entre une configuration d'extension définissant la dite configuration active du dit deuxième moyen d'interaction (32), et une configuration rétractée définissant la dite configuration inactive du dit deuxième moyen d'interaction (32).

4. Unité selon la revendication 3, **caractérisée en ce que** le dit actionneur (56) comprend un élément de sortie (58) déplaçable dans une direction (G) parallèle au dit chemin (P) ; et **en ce que** le dit mécanisme à genouillère (55) comprend deux leviers (60, 61) ayant des extrémités adjacentes articulées l'une à l'autre et au dit élément de sortie (58) du dit actionneur (56), et des extrémités opposées articulées aux dites mâchoires (6, 6') et au dit deuxième moyen d'interaction (32) respectivement.

5. Unité selon une quelconque des revendications précédentes, **caractérisée en ce que** les dites mâchoires comprennent au moins deux dispositifs de formage (6, 6') définis chacun par deux mâchoires (8a, 8b) qui coopèrent cycliquement l'une avec l'autre et avec le dit tube (3) ; et **en ce que** les dits moyens de traction (25), les dits moyens de manoeuvre (55, 56) et le dit deuxième moyen d'interaction (32) sont portés par une (8a) des dites mâchoires (8a, 8b) de chaque dit dispositif de formage (6, 6').

6. Unité selon une quelconque des revendications précédentes, **caractérisée en ce que** le dit premier moyen d'interaction comprend une came (30) s'étendant sensiblement parallèlement au dit chemin (P) et ayant une partie initiale en forme de rampe et fixée au dit moyen de support (31) dans une position réglable dans un plan perpendiculaire au dit chemin (P) ; le dit deuxième moyen d'interaction comprenant un palpeur de came (32) qui coopère de manière glissante avec la dite came (30) de façon à être déplacé par la came dans une direction (X) transversale au dit chemin (P).

7. Unité selon la revendication 6, **caractérisée en ce que** le dit palpeur de came (32) est un levier à bras oscillant ayant une partie intermédiaire (50) reliée de façon pivotante au dit mécanisme à genouillère (55) ; une première partie d'extrémité (52, 53) qui coopère avec la dite came (30), et une deuxième partie d'extrémité (54) reliée aux dits moyens de traction (25) par des moyens de transmission de mouvement (33).

8. Procédé de fabrication d'emballages hermétiques (2), sur une unité de formage (1), à partir d'un tube (3) de matériau d'emballage en feuille avancé le long d'un chemin d'avance (P), rempli avec un produit alimentaire fluide, et présentant une succession de décorations équidistantes ; le dit procédé comprenant les étapes de :
déplacement de mâchoires (6, 6') de la dite unité de formage (1) cycliquement le long d'une partie du dit chemin (P) de façon à saisir et souder le dit tube (3) de matériau d'emballage à l'endroit de sections transversales équidistantes définissant des bandes de fermeture opposées (15) des dits emballages (2) ; et
réglage de la position des dites décorations par rapport aux dites mâchoires (6, 6') par application d'une traction sur le dit tube (3) afin de régler l'avance du tube le long du dit chemin (P), sous la commande d'un dispositif de came (26) comprenant un premier moyen d'interaction fixe (30) et un deuxième moyen d'interaction (32) porté par les dites mâchoires (6, 6') et coopérant avec le dit premier moyen d'interaction (30) du fait du mouvement des mâchoires (6, 6') le long du dit chemin (P) ;
**caractérisé en ce qu'**il comprend également l'étape supplémentaire de déplacement sélectif du dit deuxième moyen d'interaction (32) entre une configuration active de coopération avec le dit premier moyen d'interaction (30) et une configuration inactive éloignée du dit premier moyen d'interaction (30).

9. Procédé selon la revendication 8, **caractérisé en ce que** le dit deuxième moyen d'interaction (32) est amené à la dite configuration inactive au démarrage de la dite unité (1).
